# DEMANDE DE BREVET EUROPEEN

(11) **EP 4 050 360 A1**
(43) Date de publication de la demande: **31.08.2022**
(21) Numéro de dépôt: 21305238.4
(22) Date de dépôt: 26.02.2021
(51) Int. Cl.: G01S 3/02

(54) **PROCÉDÉ ET INSTALLATION DE CALIBRATION D'UN APPAREIL DE GONIOMÉTRIE AÉROPORTÉ**

(71) Demandeur: Avantix, 13794 Aix-en-Provence (FR)
(72) Inventeur: TENEZE, Bernard, 13640 LA ROQUE d'ANTHERON (FR)
(74) Mandataire: IPAZ

(57) **Abrégé**

L'invention concerne un procédé (300) de calibration d'un appareil de goniométrie aéroporté à l'aide d'un générateur, dit de calibration, distant dudit appareil de goniométrie aéroporté, ledit procédé (300) comprenant les étapes suivantes :
- partage (304), entre ledit appareil de goniométrie et ledit générateur de calibration, d'une séquence de calibration,
- partage (308), entre ledit appareil de goniométrie et ledit générateur de calibration, d'une heure de commencement de ladite séquence de calibration, et
- exécution (310) de ladite séquence de calibration par ledit appareil de goniométrie et par ledit générateur de calibration, à ladite heure de commencement ;
caractérisé en ce que ladite heure de commencement est déterminée en référence à une même horloge (H), dite de référence, fournie audit appareil de goniométrie et audit générateur de calibration, par une source externe (206).

Elle concerne également une installation mettant en œuvre un tel procédé.

## Description

La présente invention concerne un procédé de calibration d'un appareil de goniométrie aéroporté. Elle concerne également une installation mettant en œuvre un tel procédé.

Le domaine de l'invention est le domaine des appareils de goniométrie aéroportés pour la détection d'émetteurs radiofréquences.

### État de la technique

Un appareil de goniométrie aéroporté est généralement composé d'un réseau d'antennes et d'au moins un récepteur relié audit réseau d'antennes. Il est utilisé pour détecter des émetteurs radiofréquences se trouvant au niveau du sol ou de la mer, et plus généralement à une altitude plus basse et survolée par le véhicule transportant ledit appareil de goniométrie aéroporté.

Pour déterminer la position de l'émetteur d'un signal radio reçu par l'appareil de goniométrie, ce dernier détermine d'une part la fréquence dudit signal reçu et mesure la valeur d'une grandeur prédéterminée. Ensuite, la valeur mesurée est comparée à des valeurs référence mémorisées dans une table de calibration prédéterminée pour ladite fréquence, chacune en association avec une position géographique. En identifiant, dans la table de calibration associée à la fréquence du signal, la valeur référence la plus proche de la valeur mesurée, il est possible de déterminer la position géographique de l'émetteur du signal radio reçu. Suivant un exemple de réalisation, la grandeur mesurée est une matrice de covariance, et la position géographique est donnée par un couple d'angles : un angle de gisement (« gisement » dans la suite), un angle de site (« site » dans la suite).

La table de calibration est prédéterminée lors d'une phase de calibration. Pour détecter des signaux dans une large gamme de fréquences, par exemple la gamme de fréquences 30Mhz-3000MHz, il est nécessaire de déterminer une table de calibration pour chaque fréquence, ou chaque bande de fréquence composant ladite gamme. Dans ce cas, la phase de calibration comprend un balayage en fréquence de ladite gamme de fréquences et une détermination des valeurs de référence pour chaque position géographique.

La calibration d'un appareil de goniométrie peut être réalisée en laboratoire, et en particulier en chambre anéchoïde, mais une telle calibration n'est pas précise car elle est éloignée des conditions externes.

La calibration d'un appareil de goniométrie aéroporté peut être réalisée lorsque ledit appareil de goniométrie est aéroporté dans les airs avec un émetteur au niveau du sol. Or, cette solution de calibration pose des problèmes de synchronisation de l'émetteur avec l'appareil de goniométrie lorsque la calibration comprend un balayage en fréquence, ce qui rend la phase de calibration longue et fastidieuse.

Un but de la présente invention est de remédier à au moins un des inconvénients précités.

Un autre but de la présente invention est de proposer une solution de calibration d'un appareil de goniométrie de manière plus précise, plus rapide et moins fastidieuse.

### Exposé de l'invention

L'invention permet d'atteindre au moins l'un de ces buts par un procédé de calibration d'un appareil de goniométrie aéroporté, en particulier en mouvement, à l'aide d'un générateur, dit de calibration, distant dudit appareil de goniométrie aéroporté, en particulier disposé au niveau du sol ou de la mer, ledit procédé comprenant les étapes suivantes :
- partage, entre ledit appareil de goniométrie et ledit générateur de calibration, d'une séquence de calibration,
- partage, entre ledit appareil de goniométrie et ledit générateur de calibration, d'une heure de commencement de ladite séquence de calibration, et
- exécution de ladite séquence de calibration par ledit appareil de goniométrie et par ledit générateur de calibration, à ladite heure de commencement ;
caractérisé en ce que ladite heure de commencement est déterminée en référence à une même horloge, dite de référence, fournie audit appareil de goniométrie et audit générateur de calibration, par une source externe.

Ainsi, l'invention permet de réaliser une calibration de l'appareil de goniométrie aéroporté, non pas en laboratoire, mais en extérieur pendant que ledit appareil de goniométrie est aéroporté par un aéronef, dans des conditions proches des conditions d'utilisation dudit appareil. Ainsi, l'invention propose une calibration plus précise de l'appareil de goniométrie aéroporté.

De plus, l'invention propose de baser la synchronisation de l'appareil de goniométrie aéroporté avec le générateur de calibration, sur une horloge de référence commune audit appareil de goniométrie et audit générateur de calibration et fournie par une source externe. Une telle synchronisation est plus rapide, plus simple et moins fastidieuse car elle ne nécessite pas d'échanger des signaux d'horloge entre le générateur de calibration et l'appareil de goniométrie aéroporté pour la synchronisation. Une telle synchronisation est plus précise car elle est basée sur une source d'horloge externe et est moins sujette à des dérives d'horloge pouvant se produire au niveau de l'appareil de goniométrie ou du générateur de calibration.

Suivant des modes de réalisation avantageux, l'horloge de référence peut comprendre, ou être, un signal d'horloge fourni par une horloge atomique.

Une telle horloge de référence présente l'avantage d'être très précise et subir peu de dérive dans le temps. Ainsi, la synchronisation obtenue est plus précise.

Suivant un exemple de réalisation, l'horloge de référence est une horloge d'un satellite.

Un satellite comporte une horloge très précise, ce qui permet de réaliser une synchronisation précise.

De plus, et surtout, la distance séparant le satellite de l'appareil de goniométrie aéroporté est du même ordre de grandeur que celle séparant ledit satellite du générateur de calibration. Ainsi, le signal d'horloge fourni par le satellite est reçu avec un décalage nul, ou négligeable, par l'appareil de goniométrie aéroporté et le générateur de calibration. Cela permet d'avoir une très bonne synchronisation de l'appareil de goniométrie et du générateur de calibration.

Suivant un exemple de réalisation préféré, l'horloge de référence peut être l'horloge d'un système de positionnement par satellite, tel que par exemple le GPS (pour « Global Positioning System ») ou GALILEO ou encore BEIDOU, et est fournie :
- à l'appareil de goniométrie par un premier récepteur dudit système de positionnement par satellite, tel que par exemple un premier récepteur GPS, couplé audit appareil de goniométrie aéroporté ; et
- au générateur de calibration par un deuxième récepteur dudit système de positionnement par satellite, tel que par exemple un deuxième récepteur GPS, couplé audit générateur de calibration.

Ainsi, chaque récepteur peut être utilisé à la fois pour déterminer une position géographique et pour fournir une horloge de référence.

Le premier récepteur est aéroporté avec l'appareil de goniométrie. Le premier récepteur peut être intégré dans l'appareil de goniométrie aéroporté, ou être un récepteur externe en liaison avec ledit appareil de goniométrie aéroporté. Dans ce dernier cas, le premier récepteur peut par exemple être un récepteur de l'aéronef transportant l'appareil de goniométrie.

Le deuxième récepteur est disposé au niveau du générateur de calibration. Le deuxième récepteur peut être intégré dans le générateur de calibration ou être un récepteur externe en liaison avec ledit générateur de calibration.

Suivant des modes de réalisation, l'horloge de référence peut être une horloge fournie par un réseau de communication, tel que le réseau de téléphonie mobile ou un réseau de communication sans fil de type Internet.

Un tel réseau ayant des émetteurs et récepteurs distribués sur une large zone géographique, il est possible de disposer d'une horloge de référence précise et de même valeur sur toute la zone sur laquelle l'appareil de goniométrie aéroporté est déplacé pendant la calibration.

Suivant des modes de réalisation, l'étape de partage d'une séquence de calibration peut comprendre une transmission, par l'appareil de goniométrie au générateur de calibration, de données représentant ladite séquence de calibration au travers d'une liaison sans fil. Dans ce cas, l'appareil de goniométrie est un appareil maitre, et le générateur de calibration est un appareil esclave et suit l'appareil de goniométrie.

Bien entendu, suivant des modes de réalisation alternatifs, il est possible que ce soit le générateur de calibration qui transmette les données représentant la séquence de calibration à l'appareil de goniométrie aéroporté. Dans ce cas, le générateur de calibration est l'appareil maître, et l'appareil de goniométrie aéroporté est l'appareil esclave et suit le générateur de calibration.

La liaison sans fil peut être une liaison unidirectionnelle.

Suivant des modes de réalisation, l'étape de partage d'une heure commencement peut comprendre une transmission, par l'appareil de goniométrie au générateur de calibration, de données représentant ladite heure de commencement. Dans ce cas, l'appareil de goniométrie est un appareil maitre, et le générateur de calibration est un appareil esclave et suit l'appareil de goniométrie aéroporté.

Bien entendu, suivant des modes de réalisation alternatifs, il est possible que ce soit le générateur de calibration qui transmette les données représentant l'heure de commencement à l'appareil de goniométrie aéroporté. Dans ce cas, le générateur de calibration est l'appareil maître, et l'appareil de goniométrie est l'appareil esclave et suit le générateur de calibration.

La liaison sans fil peut être une liaison unidirectionnelle.

Cette liaison sans fil peut en particulier être la même que celle utilisée pour partager les données relatives à la séquence de calibration.

Avantageusement, la séquence de calibration peut comprendre plusieurs itérations d'une étape de calibration comprenant les opérations suivantes :
- émission, par le générateur de calibration, d'au moins un signal de calibration à une fréquence d'émission ;
- réception dudit au moins un signal de calibration par l'appareil de goniométrie aéroporté ;
- détermination par ledit appareil de goniométrie aéroporté, d'au moins une valeur, et en particulier d'une matrice de covariance, en fonction de l'au moins un signal reçu ; et
- mémorisation de ladite valeur en association avec ladite fréquence .

Cette étape de calibration peut être réitérée pour chaque fréquence, ou bande de fréquence, d'une gamme de fréquences en vue de balayer ladite gamme de fréquence.

Cette étape de calibration peut être réitérée pour chaque position du générateur de calibration relativement à l'appareil de goniométrie aéroporté, lorsque l'un d'entre eux est en mouvement par rapport à l'autre : par exemple lorsque l'appareil de goniométrie aéroporté est en mouvement relativement au générateur de calibration, pour couvrir une gamme de positions géographiques.

Chaque position peut être donnée par un couple d'angles {Gisement ; Site} :
- le « gisement » représentation l'angle de gisement entre le générateur de calibration, et l'appareil de goniométrie aéroporté, et
- le « Site » représentant l'angle de site entre le générateur de calibration et l'appareil de goniométrie aéroporté.

En particulier, la séquence de calibration peut comprendre un balayage en fréquence d'une gamme de fréquences donnée.

La séquence de calibration peut comprendre l'indication de chaque fréquence, ou bande de fréquences, à balayer et l'ordre dans lequel ces fréquences, ou bandes de fréquences, doivent être balayées.

Alternativement, la séquence de calibration peut comprendre l'indication d'une fréquence de départ et une règle de balayage en fréquence en partant de ladite fréquence de départ.

Bien entendu, ces exemples ne sont pas limitatifs.

En outre, la séquence de calibration peut comprendre un balayage d'une gamme de positions du générateur de calibration relativement à l'appareil de goniométrie aéroporté.

Chaque position relative peut être donnée, comme indiqué plus haut, par un couple d'angles {gisement ;site}. Dans ce cas, le balayage en position peut porter sur le gisement ou sur le site ou les deux, à tour de rôle ou en même temps.

La séquence de calibration peut comprendre l'indication de chaque position relative à balayer et l'ordre dans lequel ces positions doivent être balayées.

Alternativement, la séquence de calibration peut comprendre l'indication d'une position relative de départ et une règle de balayage en position en partant de ladite position relative de départ.

Préférentiellement, la séquence de calibration peut comprendre, pour une position relative du générateur de calibration, un balayage en fréquence d'une gamme de fréquences. Puis, la position relative est changée, et une nouvelle séquence de calibration est exécutée, ainsi de suite.

Suivant un autre aspect de la même l'invention, il est proposé une installation de calibration d'un appareil de goniométrie aéroporté, ladite installation comprenant un générateur, dit de calibration, configuré pour partager, avec ledit appareil de goniométrie aéroporté, une séquence de calibration et une heure de commencement de ladite séquence de calibration, ladite installation comprenant :
- un premier récepteur d'horloge, couplé audit appareil de goniométrie aéroporté, configuré pour recevoir un signal d'horloge et fournir une horloge audit appareil de goniométrie, et
- un deuxième récepteur d'horloge, couplé audit générateur de calibration, configuré pour recevoir un signal d'horloge et fournir une horloge audit générateur de calibration ;
lesdits récepteurs étant configurés pour recevoir un signal d'horloge d'une même source, externe audit appareil de goniométrie aéroporté et audit générateur de calibration, et fournir une horloge, dite de référence, identique.

Préférentiellement, chaque récepteur d'horloge peut être :
- un récepteur satellite, et en particulier un récepteur d'un système de positionnement par satellite, et plus particulièrement un récepteur GPS, pour recevoir un signal d'horloge fourni par ledit satellite,
- un récepteur d'un réseau de communication sans fil, tel que par exemple le réseau de téléphone mobile ou le réseau Internet, pour recevoir un signal d'horloge émis par ledit réseau de communication.

Dans des versions de réalisation nullement limitatives, l'installation peut comprendre la source externe fournissant l'horloge, ou le signal d'horloge.

Dans des versions de réalisation nullement limitatives, l'installation peut comprendre l'appareil de goniométrie aéroporté, et éventuellement l'aéronef déplaçant ledit appareil de goniométrie aéroporté.

De manière générale, la source externe d'horloge peut être une source d'horloge fournissant un signal d'horloge sans fil, de tout type tant que le signal d'horloge peut être capté au niveau de l'appareil de goniométrie aéroporté et au niveau du générateur de calibration sans décalage, ou avec un décalage négligeable, permettant ainsi une synchronisation de ces deux dispositifs.

### Description des figures et modes de réalisation

D'autres avantages et caractéristiques apparaîtront à l'examen de la description détaillée d'un mode de réalisation nullement limitatif, et des dessins annexés sur lesquels :
- la FIGURE 1 est une représentation schématique d'un exemple de réalisation non limitatif d'une configuration de calibration d'un appareil de goniométrie aéroporté ;
- la FIGURE 2 est une représentation schématique d'un exemple de réalisation non limitatif d'une configuration de calibration d'un appareil de goniométrie aéroporté selon l'invention ; et
- la FIGURE 3 est une représentation schématique d'un exemple de réalisation non limitatif d'un procédé selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures les éléments communs à plusieurs FIGURES conservent la même référence.

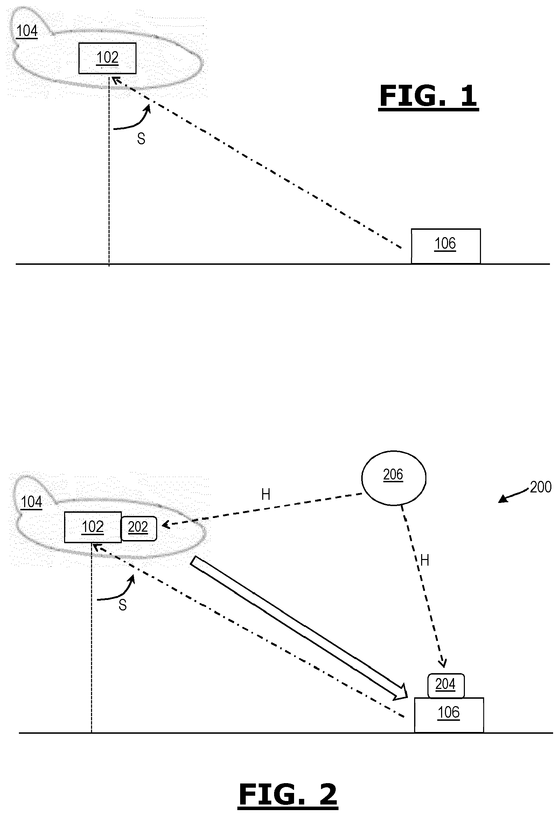

La FIGURE 1 est une représentation schématique d'un exemple de réalisation non limitatif d'une configuration de calibration d'un appareil de goniométrie aéroporté.

La FIGURE 1 montre de manière schématique un appareil de goniométrie 102 transporté par un aéronef, tel que par exemple un avion 104.

Un générateur de calibration 106, dont la position est connue, est utilisé pour calibrer l'appareil de goniométrie aéroporté 102. Le générateur de calibration 106 peut être fixe ou mobile. Le générateur de calibration 106 peut par exemple être disposé au sol.

La calibration de l'appareil de goniométrie 102 est réalisée de la manière suivante. Un signal de calibration de fréquence connue est envoyé par le générateur de calibration 106 à l'appareil de goniométrie 102. L'appareil de goniométrie mesure une grandeur. La valeur mémorisée est mémorisée en association avec la fréquence d'émission connue, et la position connue du générateur de calibration 106 relativement à l'appareil de goniométrie aéroporté 102.

Pour chaque position du générateur de calibration 106 par rapport à l'appareil de goniométrie aéroporté 102, l'étape de calibration est réitérée pour différentes fréquences, ou bandes de fréquences, en vue de balayer toute une large gamme de fréquences, dans le cadre d'une séquence de calibration. Ainsi, en fin de calibration, une table de calibration est obtenue. Cette table de calibration comprend pour chaque couple {fréquence, position} une valeur de calibration.

Suivant un exemple de réalisation non limitatif, l'appareil de goniométrie comprend un réseau d'antennes de réception. Dans ce cas, la grandeur mesurée peut, de manière nullement limitative, être une matrice de covariance indiquant les différences en réception entre lesdites antennes de réception.

La position du générateur de calibration 106 par rapport à l'appareil de goniométrie 102 peut être donnée par une combinaison de deux angles, à savoir :
- un angle de gisement, noté G, non représenté sur la FIGURE 1, qui correspond à l'angle, dans le plan horizontal, entre d'une part la direction reliant l'aéronef 104 et la générateur de calibration 106, et d'autre part une direction de référence, par exemple le nord magnétique ; et
- un angle de site, noté S, correspondant à l'angle formé entre d'une part la direction verticale entre l'appareil de goniométrie 102 (donc de l'aéronef 104) et le sol, et d'autre part la direction reliant l'appareil de goniométrie 102 (donc de l'aéronef 104) et le générateur de calibration 106.

Ces angles peuvent être fournies par des capteurs équipant l'appareil de goniométrie 102 ou l'aéronef 104.

Alternativement, ces angles peuvent être calculés à partir d'une donnée d'altitude et d'une donnée de géolocalisation de l'aéronef 104, respectivement de l'appareil de goniométrie 102, fournies par des capteurs équipant ledit aéronef 104 ou ledit appareil de goniométrie 102. En effet, la géolocalisation du générateur de calibration 106 étant connue, les angles de gisement G et de site S peuvent être calculés à partir de l'altitude et de la géolocalisation de l'appareil de goniométrie 102 (ou de l'aéronef 104).

Chaque signal de calibration émis par le générateur de calibration 106 peut être une salve de signaux (« burst » en anglais)

Ainsi, lors de la phase de calibration, il est très important que l'appareil de goniométrie 102 connaisse la fréquence de chaque signal de calibration émis par le générateur de calibration 106, au moment où il reçoit ce signal de calibration. Cela nécessite de synchroniser l'appareil de goniométrie 102 et le générateur de calibration 106 de sorte que lorsque le générateur de calibration 106 émet un signal de calibration d'une fréquence donnée f₀, l'appareil de goniométrie 102 connaisse la fréquence f₀ pour mémoriser la valeur de la grandeur mesurée en association avec ladite fréquence f₀.

La FIGURE 2 est une représentation schématique d'un exemple de réalisation non limitatif d'une installation de calibration d'un appareil de goniométrie aéroporté selon l'invention.

L'installation 200 de la FIGURE 2 est représentée dans la même configuration que celle représentée sur la FIGURE 1 avec les mêmes éléments.

L'installation 200 comprend le générateur de calibration 106.

De plus, l'installation 200 comprend en outre un premier récepteur 202 et un deuxième récepteur 204 d'un signal d'horloge fourni par une même source externe 206 de sorte que le premier et deuxième récepteur reçoivent une même horloge, dite de référence, commune.

Le premier récepteur 202 est couplé à l'appareil de goniométrie aéroporté 102 et communique l'horloge H fournie par la source externe 206 audit appareil de goniométrie aéroporté 102. Le premier récepteur 202 peut être intégré à l'appareil de goniométrie aéroporté 102, ou peut-être un récepteur de l'aéronef 104, ou encore peut être un appareil indépendant couplé audit appareil de goniométrie aéroporté 102.

Le deuxième récepteur 204 est couplé au générateur de calibration 106 et communique l'horloge H fournie par la source externe 206 audit générateur de calibration 106. Le deuxième récepteur 204 peut être intégré au générateur de calibration 106, ou peut être un appareil indépendant couplé audit générateur de calibration 106.

Ainsi, il est possible d'avoir une même horloge au niveau de l'appareil de goniométrie aéroporté 102 et du générateur de calibration 106 de sorte que ces deux appareils peuvent être synchronisés de manière très précise. Il est alors possible de partager entre ces deux appareils une séquence de calibration comprenant un balayage en fréquence d'une large gamme de fréquences, sans perte de synchronisation.

Préférentiellement, chaque récepteur d'horloge 202 et 204 est un récepteur satellite, et en particulier un récepteur d'un système de positionnement par satellite, et plus particulièrement un récepteur GPS, pour recevoir un signal d'horloge généré par une horloge atomique dudit satellite. Ainsi, le signal d'horloge reçu est très précis. De plus, le décalage entre l'horloge reçu par l'appareil de goniométrie 102 et le générateur de calibration 106 est nulle ou négligeable.

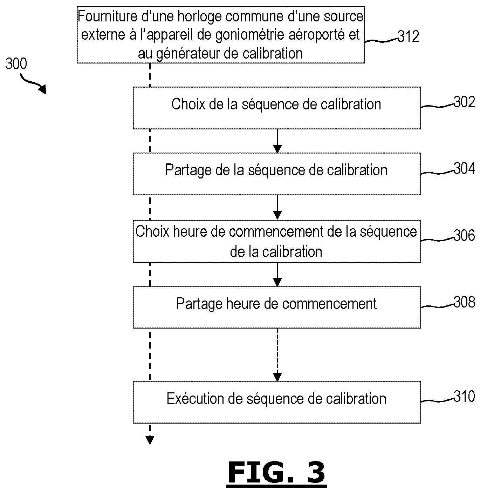

La FIGURE 3 est une représentation schématique d'un exemple de réalisation non limitatif d'un procédé de calibration d'un appareil de goniométrie aéroporté selon l'invention.

Le procédé 300 de la FIGURE 3 permet de calibrer un appareil de goniométrie aéroporté, tel que par exemple l'appareil 102 des FIGURES 1-2, avec un générateur de calibration distant, en particulier au sol, tel que par exemple le générateur de calibration 106 des FIGURES 1-2.

Le procédé 300 peut être mis en œuvre dans une installation selon l'invention, et en particulier dans l'installation 200 de la FIGURE 2.

Le procédé 300 comprend une étape 302 lors de laquelle une séquence de calibration est choisie. Le choix de la séquence de calibration peut comprendre un choix d'une position de calibration parmi une pluralité positions de calibration, un choix d'une gamme de fréquences à balayer, etc. Le choix de la séquence peut être réalisé au niveau d'un appareil de gestion distant à la fois de l'appareil de goniométrie et du générateur de calibration, ou au niveau du générateur de calibration, ou de préférence au niveau de l'appareil de goniométrie aéroporté. Dans la suite, et de manière nullement limitative, on considère que le choix de la séquence de calibration est réalisé au niveau de l'appareil de goniométrie aéroporté, en particulier pendant que ledit appareil est aéroporté dans un aéronef.

La séquence choisie est ensuite partagée avec le générateur de calibration lors d'une étape 304, par exemple au travers d'une liaison sans fil unidirectionnelle entre l'appareil de goniométrie et le générateur de calibration.

Lors d'une étape 306, une heure de commencement de la séquence calibration est choisie. Le choix de l'heure de commencement peut être réalisé au niveau de l'appareil de gestion distant, ou au niveau du générateur de calibration, ou de préférence au niveau de l'appareil de goniométrie aéroporté. Dans la suite, et de manière nullement limitative, on considère que le choix de l'heure de calibration est réalisé au niveau de l'appareil de goniométrie aéroporté, en particulier pendant que ledit appareil est aéroporté dans un aéronef.

L'heure de commencement choisie est ensuite partagée avec le générateur de calibration lors d'une étape 306, par exemple au travers de la liaison sans fil unidirectionnelle.

Lorsque l'heure de commencement est atteinte, le générateur de calibration commence à exécuter la séquence de calibration, c'est-à-dire à réaliser un balayage en fréquence de la gamme de fréquences en émission, tel qu'indiqué dans la séquence de calibration.

De son côté, à la même heure de commencement, l'appareil de goniométrie exécute la même séquence de calibration telle que partagée avec le générateur de calibration, c'est-à-dire à réaliser un balayage en fréquence de la gamme de fréquence en réception, tel qu'indiqué dans la séquence de calibration, pour déterminer et mémoriser une valeur de référence pour chaque fréquence, ou bande de fréquences, émise par le générateur de calibration.

Pour garantir que la séquence de calibration est déclenchée au même moment par l'appareil de goniométrie aéroporté et le générateur de calibration, c'est-à-dire pour garantir que, à chaque instant « t » pendant la séquence de calibration, la valeur mesurée et mémorisée par l'appareil de goniométrie correspond bien à la fréquence d'émission du générateur de calibration audit instant « t », le procédé 300 comprend une étape 312 fournissant une horloge de référence, fournie par une source externe, audit appareil de goniométrie et audit générateur de calibration. L'horloge de référence est de préférence l'horloge d'un satellite.

C'est cette horloge commune qui est utilisée par l'appareil de goniométrie aéroporté et par le générateur de calibration pour déterminer sur l'heure de commencement est atteinte ou non.

Dans l'exemple représentée sur la FIGURE 3, l'horloge de référence est fournie de manière ponctuelle, avant l'étape 302 de choix de la séquence de calibration. Bien entendu, l'étape 312 de fourniture de l'horloge peut être réalisée, à un autre moment avant l'heure de commencement.

Alternativement, ou en plus, l'étape 312 peut être réitérée plusieurs fois lors du procédé 300 de sorte que la valeur de l'horloge est fournie à plusieurs reprises lors dudit procédé.

Suivant encore une autre alternative, l'étape 312 peut être réalisée de manière continue pendant tout le procédé selon l'invention de sorte que la valeur de l'horloge est continuellement connue par l'appareil de goniométrie aéroporté et le générateur de calibration à tout moment.

De plus, dans l'exemple représentée, la séquence de calibration et l'heure de commencement sont partagées lors de deux étapes distinctes. Suivant une alternative, la séquence de calibration et l'heure de commencement peuvent être partagées lors d'une unique étape.

En outre, la séquence de calibration peut être réalisée sans interruption.

Alternativement, la séquence de calibration peut être interrompue et reprises une ou plusieurs fois, à l'initiative de l'appareil de goniométrie aéroporté, ou du générateur de calibration.

Bien entendu, l'invention n'est pas limitée aux exemples détaillés ci-dessus donnés à titre d'illustration et la portée générale de l'invention est définie dans les revendications.

## Revendications

1. Procédé (300) de calibration d'un appareil de goniométrie (102) aéroporté à l'aide d'un générateur (106), dit de calibration, distant dudit appareil de goniométrie aéroporté (102), ledit procédé (300) comprenant les étapes suivantes :
- partage (304), entre ledit appareil de goniométrie (102) et ledit générateur de calibration (104), d'une séquence de calibration,
- partage (308), entre ledit appareil de goniométrie (102) et ledit générateur de calibration (106), d'une heure de commencement de ladite séquence de calibration, et
- exécution (310) de ladite séquence de calibration par ledit appareil de goniométrie (102) et par ledit générateur de calibration (104), à ladite heure de commencement ;
**caractérisé en ce que** ladite heure de commencement est déterminée en référence à une même horloge (H), dite de référence, fournie audit appareil de goniométrie (102) et audit générateur de calibration (106), par une source externe (206).

2. Procédé (300) selon la revendication précédente, caractérisé en ce l'horloge de référence (H) comprend un signal d'horloge fourni par une horloge atomique.

3. Procédé (300) selon l'une quelconque des revendications précédentes, **caractérisé en ce que** l'horloge de référence (H) est une horloge d'un satellite.

4. Procédé (300) selon l'une quelconque des revendications précédentes, **caractérisé en ce que** l'horloge de référence (H) est l'horloge d'un système de positionnement par satellite et est fournie :
- à l'appareil de goniométrie (102) par un premier récepteur (202) dudit système de positionnement par satellite couplé audit appareil de goniométrie aéroporté (102) ; et
- au générateur de calibration (106) par un deuxième récepteur (204) dudit système de positionnement par satellite couplé audit générateur de calibration (204).

5. Procédé (300) selon la revendication 1, **caractérisé en ce que** l'horloge de référence (H) est une horloge fournie par un réseau de communication, tel que le réseau de téléphonie mobile.

6. Procédé (300) selon l'une quelconque des revendications précédentes, **caractérisé en ce que** l'étape (304) de partage d'une séquence de calibration comprend une transmission, par l'appareil de goniométrie (102) au générateur de calibration (106), de données représentant ladite séquence de calibration, au travers d'une liaison sans fil, en particulier unidirectionnelle.

7. Procédé (300) selon l'une quelconque des revendications précédentes, **caractérisé en ce que** l'étape (308) de partage de l'heure commencement comprend une transmission, par l'appareil de goniométrie (102) au générateur de calibration (106), de données représentant ladite heure de commencement, au travers d'une liaison sans fil, en particulier unidirectionnelle.

8. Procédé (300) selon l'une quelconque des revendications précédentes, **caractérisé en ce que** la séquence de calibration comprend plusieurs itérations d'une étape de calibration comprenant les opérations suivantes :
- émission, par le générateur de calibration (106), d'au moins un signal de calibration à une fréquence d'émission ;
- réception dudit au moins un signal de calibration par l'appareil de goniométrie aéroporté (102) ;
- détermination, par ledit appareil de goniométrie aéroporté (102), d'au moins une valeur, et en particulier d'une matrice de covariance, en fonction de l'au moins un signal reçu ; et
- mémorisation de ladite valeur en association avec ladite fréquence .

9. Procédé (300) selon l'une quelconque des revendications précédentes, **caractérisé en ce que** la séquence de calibration comprend un balayage en fréquence d'une gamme de fréquences donnée.

10. Procédé (300) selon l'une quelconque des revendications précédentes, **caractérisé en ce que** la séquence de calibration comprend un balayage d'une gamme de positions du générateur de calibration (106) relativement à l'appareil de goniométrie aéroporté (102).

11. Installation (200) de calibration d'un appareil de goniométrie aéroporté (102), ladite installation comprenant un générateur (106), dit de calibration, configuré pour partager avec ledit appareil de goniométrie aéroporté (102) une séquence de calibration et une heure de commencement de ladite séquence de calibration, ladite installation comprenant :
- un premier récepteur d'horloge (202), couplé audit appareil de goniométrie aéroporté (102), configuré pour recevoir un signal d'horloge et fournir une horloge audit appareil de goniométrie (102), et
- un deuxième récepteur d'horloge (204), couplé audit générateur de calibration (106), configuré pour recevoir un signal d'horloge et fournir une horloge audit générateur de calibration (106) ;
lesdits récepteurs (202,206) étant configurés pour recevoir un signal d'horloge d'une même source (206), externe audit appareil de goniométrie aéroporté (102) et audit générateur de calibration (106), et fournir une donnée d'horloge, dite de référence, identique.

12. Installation (200) selon la revendication précédente, **caractérisée en ce que** chaque récepteur d'horloge (202,206) est :
- un récepteur satellite, et en particulier un récepteur d'un système de positionnement par satellite, et plus particulièrement un récepteur GPS, pour recevoir un signal d'horloge fourni par ledit satellite,
- un récepteur d'un réseau de communication sans fil, tel que par exemple le réseau de téléphone mobile ou le réseau Internet, pour recevoir un signal d'horloge émis par ledit réseau de communication.
